(19) Europäisches Patentamt
European Patent Office
Office européen des brevets

(11) **EP 3 367 626 A1**

(12) **EUROPEAN PATENT APPLICATION**

(43) Date of publication:
**29.08.2018 Bulletin 2018/35**

(51) Int Cl.:
***H04L 29/06*** *(2006.01)*     ***H04N 21/2343*** *(2011.01)*
***G06F 17/30*** *(2006.01)*

(21) Application number: **17158163.0**

(22) Date of filing: **27.02.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Nokia Solutions and Networks Oy
02610 Espoo (FI)**

(72) Inventors:
• **Aerts, Maarten
2018 Antwerpen (BE)**
• **Lievens, Sammy
2018 Antwerpen (BE)**
• **Tytgat, Donny
2018 Antwerpen (BE)**
• **Macq, Jean-François
2018 Antwerpen (BE)**
• **Rondao Alface, Patrice
2018 Antwerpen (BE)**
• **Verzijp, Nico Victor
2018 Antwerpen (BE)**
• **Stevens, Christoph
2018 Antwerpen (BE)**

(74) Representative: **Philippaerts, Yannick et al
Arnold & Siedsma
Bezuidenhoutseweg 57
2594 AC The Hague (NL)**

(54) **PROVIDING CONTENT**

(57) Content delivery system for providing content from a server to a client, the system comprising a consumer space, a producer space, and a transmission space, wherein a first content transformation block is provided between the producer space and the transmission space, and a second content transformation block is provided between the transmission space and the consumer space, wherein transmission space further comprises a sender and a receiver to transmit content between the transformation blocks over a network, wherein the consumer space comprises a display block for displaying content from the second content transmission block, wherein a selection block is provided for monitoring a state of the at least one client and for providing feedback regarding the monitored state to the producer space, wherein an ingest block is provided at the producer space for fetching content to the first content transformation block from a content source based on said feedback.

FIG. 5

**Description**

Technical Field

The present invention relates to an content delivery system and a method for providing content from a server to a client. In particular, it relates to rendering a partial view on otherwise abundant content.

Background

Many current day applications render a partial view on otherwise abundant content. Which part may be decided by the user's actions and is in the further description called the viewport. E.g. Google Maps shows a partial subset at a certain level of detail of a complete database of geographical data and satellite images. Another example is looking at a big, detailed scene in a Virtual Reality game through a Head Mounted Device (hereafter HMD). In both cases it would not be suitable to stream the whole content to the user, as the user needs only a small subset of the content, which subset is defined by the user's current viewport. Typically, the client fetches only what is needed and may further pre-fetch a bit of content around it to be able to provide a zero-latency response to small changes in viewport. When the term "random access" is used in this text, this selectivity requirement is referred to. A drawback of this way of working is that it requires the content to reside in different files or to be structured so that it can be queried from a database.

Alternatively, one could choose to stream exactly what the user needs in a 'thin client' model, where the user's device is nothing more than a video stream player. However, in such a case it is hard to enable a responsive application that could handle changes of the user's viewport at zero latency.

There isn't always a dependency between how the content is made available and the parts needed by the client, that can be exploited explicitly.

It is an object of the present invention to enable filtering the full content at the server side and feed it through a fixed static connection to a client while respecting the independency of how the content is partitioned at the server side and how it is consumed by the client.

It is an object of at least an embodiment of the invention to optimize 360 panoramic video resolution using a predetermined transmission channel, to improve bandwidth efficiency and decoded quality, to increase the feeling of immersion for the end user when the user explores the streamed 360 content, for example using a HMD by moving the head and optionally by zooming.

Summary

To this end, the invention provides an content delivery system for providing content from a server to a client, the content delivery system comprising a consumer space at the client side, a producer space at the server side, and a transmission space interconnecting said consumer space and said producer space, wherein a first content transformation block is provided to transform content between the producer space and the transmission space, and a second content transformation block is provided to transform content between the transmission space and the consumer space, wherein transmission space further comprises a sender and a receiver to transmit content between the transformation blocks over a network, wherein the consumer space comprises a display block for displaying content from the second content transformation block, wherein a selection block is provided for monitoring a state of the at least one client and for providing feedback regarding the monitored state to the producer space, wherein an ingest block is provided at the producer space for fetching content to the first content transformation block from a content source based on said feedback.

The setup with three different spaces allows content optimization in each space. The skilled person will recognize that the three spaces do not form physical elements and/or do not form functional blocks. The different spaces are abstract terms to describe the different representations of the content. The content transformation blocks translate between the spaces. This allows content to be stored at the server and fetched from the server in a way that is optimal for the server. Furthermore content can be optimally delivered and consumed by a consumer. The selection block provides a feedback mechanism to communicate to the server and transformation blocks regarding user state and/or user requirements. Tthe content delivery system enables filtering the content at the server side and feeding it through a fixed static connection to a client while respecting the independency of how the content is partitioned at the server side and how it is consumed by the client.

Preferably the content is 360 panoramic video, and said state comprises at least one of a longitude, a latitude, a roll and a field of view (FOV). The content delivery system of the invention is particularly optimized for processing 360 panoramic video. By providing feedback regarding a longitude, latitude, roll and/or field of view, a partial view can be created at the server side. The content delivery system of the invention further allows to optimize 360 panoramic video resolution using a predetermined transmission channel, to improve bandwidth efficiency and decoded quality, to increase the feeling of immersion for the end user when the user explores the streamed 360 content, for example using a HMD by moving the head and optionally by zooming.

Preferably said ingest block is adapted to fetch content from said 360 panoramic video that is related to at least one roll-independent viewport, which is spherically projected on a fixed rectangle. A spherical projection can easily be transmitted using existing coding and decoding mechanisms.

Preferably said viewport is enlarged using a predetermined enlarging mechanism to reduce latency effects when said client changes state. By enlarging the viewport, effects of latency are reduced when a user changes state, for example changing longitude or latitude.

Preferably said viewport is supplemented by a further viewport having a significantly larger shape and a lower resolution. The further viewport can be used by the display block to display content when the user changes state fast. This improves user experience.

Preferably the ingest block and the first content transformation block are adapted to transform the content into frames. Frames can easily be transmitted using existing coding and decoding mechanisms. Preferably a single ingest block is connected to multiple first content transformation blocks, wherein each of the multiple first content transformation blocks is allocated to a different client in a different consumer space. This improves processing efficiency at the server side. Preferably multiple channels are formed between the sender and receiver, wherein each channel transmits a different segment of said content.

The invention further relates to a server device for use in the content delivery system of the invention, wherein the server device comprises a first content transformation block provided to transform content between a producer space and a transmission space, and comprising a sender for sending the transformed content to a receiver at a client device, the server device further comprising an ingest block provided for fetching content from a content source to the first content transformation block based on feedback from a selection block provided for monitoring a state of the client device.

The invention further relates to a client device for use in the content delivery system of the invention, wherein the client device comprises a receiver for receiving content from a sender at a server device, and comprising a second content transformation block provided to transform content from the receiver between a transmission space and a consumer space, the client device further comprising a display block for displaying the content from the second content transformation block, and the client device being provided for monitoring a state of the at least one client device and for providing feedback regarding the monitored state to the server device.

The invention further provides in a method for providing content from a server to a client, the method comprising:

- Receiving feedback regarding a state of the client via a selection block at an ingest block which is provided at a producer space, at the server side;
- Fetching content from a content source, based on said feedback, to a first content transformation block which is provided between said producer space and a transmission space;
- Transforming, at the first content transformation block, the fetched content for transmission;
- Transmitting said transformed content via a sender and receiver provided at the transmission space;
- Transforming, at a second content transformation block which is provided between said transmission space and a consumer space at the client side, content from said receiver into content for a display block provided at the consumer space;
- Displaying the content to the client.

The advantages described above in relation to the content delivery system of the invention are also applicable for the method of the invention.

Preferably the content is 360 panoramic video, and wherein the state of the client comprises at least one of a longitude, a latitude, a roll and a field of view (FOV) obtained by a state detector.

Preferably said fetching comprises selecting content from said 360 panoramic video, said selecting being related to at least one roll-independent viewport, which is spherically projected on a fixed rectangle to be displayed by said display block.

Preferably the method further comprises the step of enlarging said viewport using a predetermined enlarging mechanism to reduce latency effects when said client changes state.

Preferably the method further comprises the step of supplementing said viewport by a further viewport having a significantly larger shape and a lower resolution.

Brief description of the figures

Some embodiments of apparatus and/or methods in accordance with embodiments of the present invention are now described, by way of example only, and with reference to the accompanying drawings, in which:

figure 1 shows a content-adaptive tiling where the resolution of tiles close to the poles are reduced;

figure 2 illustrates overlapping tiles settings with the central tile highlighted;

figure 3 illustrates multi-resolution tiling, where tiles all share the same resolution but represent content at different scales and locations;

figure 4 illustrates a stereoscopic 360 video representation;

figure 5 illustrates a block diagram of an embodiment of the invention, wherein additional streams and/or clients are added in gray;

figure 6 illustrates possible choices in an embodiment of the invention;

figure 7 illustrates a viewing pyramid to the left and a viewing cone to the right of a user looking at a specific longitude, latitude and roll angle; and

figure 8 shows the resulting region for different sets of parameters.

Detailed description of embodiments

In the first part of the description, the context of the present invention is explained. Based on this context, the invention is explained in a further part. The skilled person will recognize that techniques previously used in the art, and described as context, can be suitable for implementation in embodiments of the invention to improve the operation and/or efficiency of the invention.

Selecting and fetching partial content, initiated by the client works well in some cases, for example when the content resides in different files or can be queried from a database. However, in other examples, the content is not easily split or fetched as such. Or this partitioning may not be suitable for streaming. For instance when looking to a 360 panoramic video, the video could be split in smaller tiles and streamed separately. A client then selectively subscribes to the streams he needs. But this would be a dynamic process and switching subscriptions frequently might cause too much delay. Moreover, this assumes that there exists only a limited set of tiles. When looking at that 360 panoramic video at many zoom levels, the number of tiles quickly increases. Also, most devices can't handle decoding many tiles at once plus frequent switching decoding contexts every time they need to subscribe to a new tile. They prefer some stability in the connection, by subscribing to one or few fixed streams for a long period of time. When the terms "fixed/static connection/channel/stream" are used in this description, this requirement is referred to.

At the whole other side of the spectrum, one could choose to stream exactly what the user needs in a 'thin client' model, where the user's device is nothing more than a video stream player. However, in such a case it is hard to enable a responsive application that could handle changes of the user's viewport at zero latency. To compensate the reality would need to be modeled to send a bit more. E.g. in a 360 panoramic video, the model is a textured sphere. It could be possible to send a bit more of this partial view on the sphere, but that would not necessarily yield a directly encodable rectangle of information that the thin client then has to crop. It becomes more obvious when a texture mapped onto a 3D face or another more complex shape is streamed. Then the viewport certainly isn't this rectangular view panning through a big planar image like in the Google Maps case. So it would be not possible to simply fetch the current viewport plus some margin.

The goal of any end-to-end omnidirectional video streaming system is to provide a maximal video resolution and quality for each eye of a user wearing a HMD (head mounted display) with a minimal latency such that whatever head motion the user does, he or she still feels totally immersed in the 360 content.

First systems used a projection of the full spherical 360 video content onto the 2D plane (often called "panorama") to conveniently code and store the omnidirectional video content with well-known 2D video or image compression standards such as H.264/AVC, HEVC, JPEG etc. These systems streamed the full projected panorama to the user's HMD client. This approach however is neither bandwidth effective nor providing enough quality where the user is looking at as, in order to increase the video resolution for each eye, the encoded panorama resolution would need to be uniformly increased leading to compression, streaming and decoding issues, not to mention the waste of bits spent on areas of the sphere where the user is not looking at.

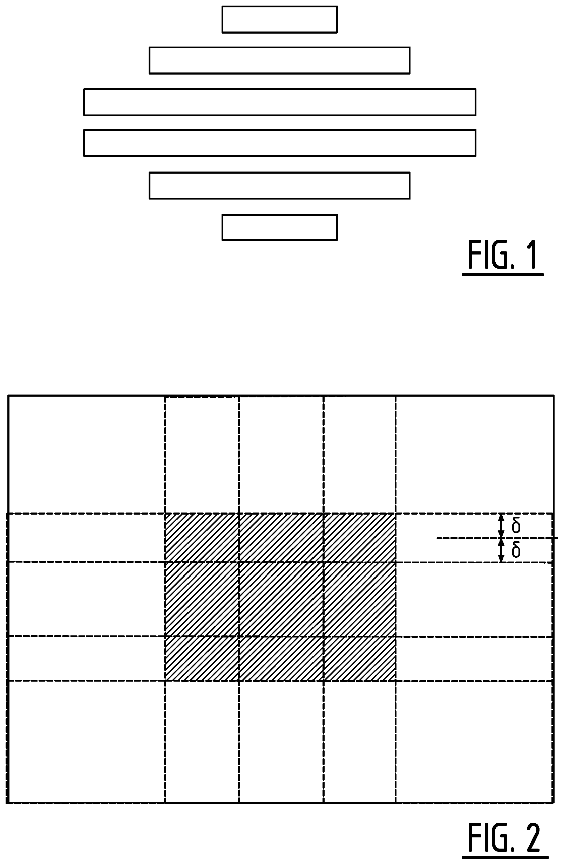

Several optimizations have been proposed in the literature to offer spatial random access on the spherical content to increase the video resolution where it is needed and reduce bits spent encoding areas that are not in view. These include 2D tiles (usually encoded at the video resolution of the HMD), which can be uniformly sampled or adaptively sampled to optimize the coding close to the poles, that are encoded independently and streamed to the user based on its viewing position. These tiles can represent a partition of the panorama or overlap each other by design, they can also be represented at different scales and resolutions, the simplest approach consisting in sending a down-sampled panorama together with a high-resolution tile to the client device. Such tiles are illustrated in figures 1 and 2. Figure 1 shows a content-adaptive tiling where the resolution of tiles close to the poles are reduced. Figure 2 illustrates overlapping tiles settings with the central tile highlighted for clarity purposes. Overlapping enables to load less tiles for a given viewport position but involve a higher storage gain depending on the overlapping factor $\delta$.

Beyond tiling, so-called regional projection-based representations split the sphere into several regions that are projected non-uniformly on cubes or pyramids in such a way that the central view is optimally sampled and the surrounding pixels are subsampled and re-combined around that central view to be coded as a standard 2D video. When the user moves to another area, another tile need to be fetched as soon as possible as the user starts to see these peripheral subsampled areas. This becomes a problem particularly in case of large or fast movements of the user. Indeed, chances to see low quality video highly increase when the user changes viewpoint, especially when increasing the panorama resolution, because the number of tiles also increases significantly.

Given that most current systems are based on HTTP-Adaptive-Streaming (HAS) for streaming tiles to the HMD, the response of the system to enhance the video quality during head motion by fetching and displaying the most suitable tiles, is impacted by the duration of the tile segments, which in current systems is typically in the order of two seconds.

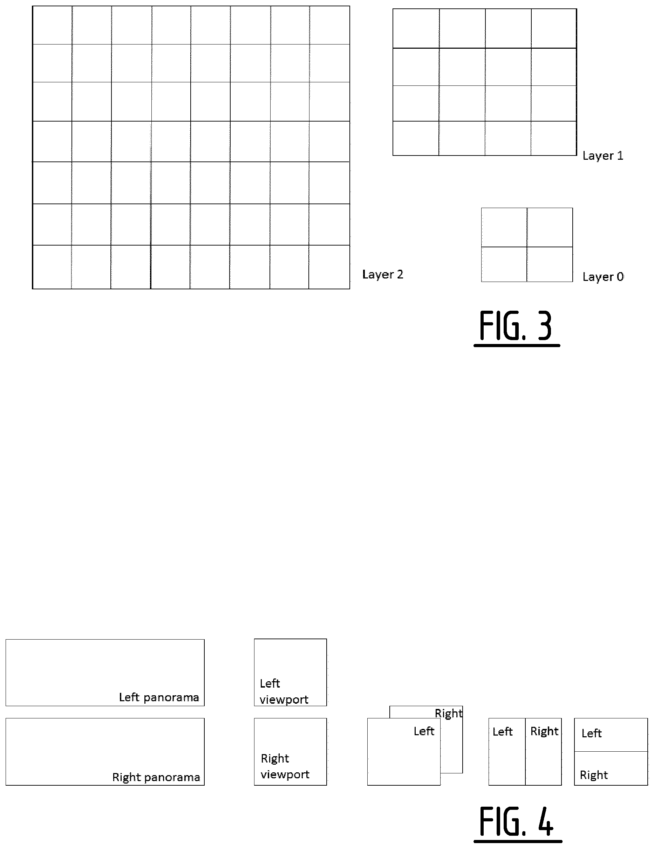

Adding a zooming functionality to the system on top of head motion to change the viewport of the user increase further this issue as higher resolution tiles need to be sent and displayed on the HMD, therefore multiplying the total number of tiles. Figure 3 illustrates such multi-resolution tiling, where tiles all share the same resolution but represent content at different scales and locations. In figure 3, layer 0 tiles cover large panorama regions, layer 1 cover twice as small panorama regions and so on. The scale differences are preferably not dyadic but are preferably discrete.

Some techniques have been proposed to reduce the latency at which the new optimal tile is fetched; typically by pre-fetching most probable tiles neighboring the current one that is in view; this can be done by tracking the content motion (e.g. region of interest tracking) as well as the user interactions, using for example one or several Kalman filters. However, the uncertainty on the next user viewpoint leads to pre-fetch too many tiles and reduce the bandwidth efficiency, which challenges the battery consumption of the end-device for un-tethered HMDs due to the extra access and decoding cost.

Finally cinematic stereoscopic virtual reality has also been investigated recently with approaches enabling high efficient video coding (HEVC), also known as H.265 and MPEG-H Part 2, compatible viewport streaming. As of today, the additional storage and coding complexity of 360 stereoscopic content does not enable large resolutions at the ingest and much is still to be researched on the user perception with HMD in stereoscopic scenarios when encoding distortions are not similar for both eyes, which is not guaranteed in prior art approaches. Figure 4 illustrates a stereoscopic 360 video representation. The figure shows from left to right two texture panama's for left and right eye respectively (optionally each with a depth map); the left and right viewports extracted from the corresponding panoramas, multiple options for stereoscopic viewport streaming. The options include, from left to right, a single stream; temporal interleaving, left-right frame packing or top-down frame packing.

It follows that no prior art system scales in terms of input spherical video resolution, bandwidth efficiency and decoded quality, while all these are necessary to increase the feeling of immersion for the end user when he/she explores the streamed 360 content by moving the head and zooming.

The present invention sees content residing in three different spaces. The first space is a producing space, where the content is partitioned and encoded for storage, or defined by a live capture setup. At the producing space, the content resides solely at the server side. The second space is a transmission space, where the content is partitioned and compressed for transmission over a network connection via a sender and a receiver. At the transmission space, the content resides on the channel between server and client. The third space is a consuming space, where the content is made suitable for rendering. At the consuming space, the content resides solely at the client's side. These three different spaces create a content delivery system wherein content lives in all three spaces, but undergoes a transformation to go from one space to the next space.

A transformation of content between the spaces is required to distinguish the present invention from prior art systems. If producing space and transmission space where the same, the system would be simply streaming tiles. If transmission space and consuming space where the same, the system would act like a thin client setup. Note that it is possible for the producing and consuming space to be the same, but wherein the content needs to be changed for transmission. In the latter case, the invention is beneficial.

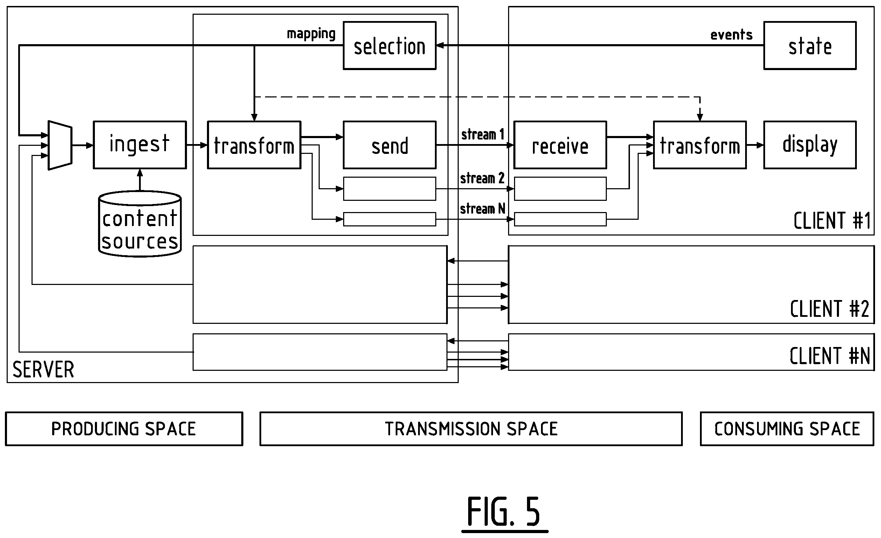

Figure 5 illustrates a block diagram with the main elements of the content delivery system of the present invention. Figure 5 illustrates the producing space, the transmission space and the consuming space. Furthermore, figure 5 illustrates the elements which are physically forming the system, and which elements allow to distinguish the three spaces, which are rather imaginary spaces and not physical spaces. At the producing space, the content delivery system comprises an ingest block and a content source. The producing space is connected to the transmission space by a first content transformation block. At the transmission space, the content delivery system comprises a sender and a receiver to transmit the content over a network connection. At the consuming space, the content delivery system comprises a display block and a state monitor. The state monitor communicates with the selection block. The display block receives content from a second transformation block, interconnecting the transmission space with the consuming space. Furthermore, a selection block is provided. The different blocks and their functionalities are described hereunder in detail.

Figure 5 further illustrates that multiple clients can be connected to the producing space. The ingest block can be shared so that at the server side, encoded views can be reused.

### Selection block

The selection block is at the heart of the content delivery system, bridging the producing space to the transmission space. It constantly analyzes events coming from the client informing the server of the current state of the client. Based on this, it optimizes the balance between what the client would need and efficient use of resources. Therefore, this optimization also takes into account knowledge about the connected device, such as its computational resources and display resolution, about the channel, such as maximal throughput and latency measurements, and about the server's computational and memory capabilities as well. Abstraction is taken of where the selection block resides. It may either be server side or client side. In figure 5 it is drawn as it would be a server block.

The events coming from the client may be as simple as a set of parameters describing the degrees of freedom of the user interacting with the content. For a HMD, that's typically 3 angles describing the rotation and sometimes 3 translation parameters. But one could easily add a zooming parameter, or a frame sequence index. Also, user preferences or an application state may influence the requested viewport. The selection block then calculates the requested visibility and resolution within the full content from these state parameters, transforming them to producing space. The client events may also be more complex and already include visibility or resolution maps on the content model. In general, they're user's requests to specific parts of the content, but they reside in the consuming space. It's the selection block's task to bring them back to the producing and transmission spaces.

The outcome of the optimization is a mapping from the content sources to one or more well-defined frames that can be streamed, for example with standard video codecs, through an established connection between the server and the client. This mapping will tell the ingest block which parts of the content to make available and tell the transformation block where to get the content parts and in which stream to put them and in what form. It is a mapping from the producing space to the transmission space, but it may be a selective one, meaning that not all parts of the map will get sourced and that not all parts of the source will get mapped. In conclusion, the selection block is responsible for choosing the appropriate transmission space, constraint by the channel connection.

### Ingest block

At the server side, the ingest block may be fetching data from a storage or from a live feed captured by one or more cameras. The content may be a single file or partitioned into regions, resolutions and/or frames. The reason for this partitioning is the random access requirement. An example of this partitioning is described in relation to the second embodiment hereunder. The content may be in different file formats, color spaces and framerates. It can be compressed or raw. The ingest block is responsible of reading and decoding all parts that are accessed by the mapping of all clients connected to the server. Since the clients are probably correlated, it makes sense not to have a dedicated ingest block for all clients, but have it shared. This way, if two clients get a map accessing the same content partition, it only needs to be fetched and optionally decoded once, sparing server's resources.

### First content transformation block

The first transformation block is responsible of actually performing the mapping from producing space to transmission space. It takes in the raw, decoded parts of data from the ingest block and write it to frames, preferably rectangular frames, ready to be transmitted. This transformation may be a simple distributed memory copy concatenating parts, but may include rescaling, cropping, or more complex mappings. It performs interpolation between pixels if resolutions don't match, between mipmap planes, if mipmap levels don't match, and frames, if framerates don't match between what is available at the producing stage and what will be transmitted. It converts pixel formats if color spaces don't match. Since it is an incomplete mapping to a fixed stream, it will pad the frames, where needed to form encodable streams.

### Sender and receiver

The sender takes the frames from the first transformation block, optionally encodes them and puts them on the fixed connection channel to the client, ready to be decoded. At the client side, the receiver receives the frames and optionally decodes them and transmits them to the second content transformation block.

### Second content transformation block

At the client's side, opposite tasks are performed. The frames are received and optionally decoded by the receiver. Consequently, it needs to be brought back from transmission to the consuming space, where it can be rendered to a screen. This happens in the second content transformation block. It is often implemented as a texture mapping, handled by shaders in the rendering pipeline. Anyway, this block too must be informed of the parameters that define the mapping between the transmission space and the consumer's space, chosen by the selection block.

When the selection block resides at the server side, this information needs to be transmitted as well to the client. This transmission can happen explicitly through a separate channel, indicated by the dash line in figure 5. But it can happen implicitly within the already established data channel as well, as we will discuss in the embodiments. After the transformation, the pixels can be rendered to the user's displaying device.

Embodiments

Some preferred embodiments are described hereunder. Specific choices for all implementations of blocks and signals are described in the section below. These choices are not intended to be limited for the scope of the invention.

Two independent embodiments of the invention are described. The first embodiment focusses on the transmission space for a specific type of content and the second embodiment focusses on the producing space.

Embodiment 1: 360 panoramic video

In this embodiment a specific type of content is specified. The clients have head mounted devices (HMDs) looking around in a 360 panoramic video. This content is streamed by the server. Typically, the consuming space is a textured object like a sphere, a cylinder or a cube, rendered around the user's virtual camera. For the further explanation, a sphere-shaped object is selected. The same principles apply for objects with other shapes such as a cylinder or a cube. When the virtual camera looks around, it sees different parts of the sphere, which are then displayed in the HMD. A spherical manifold however, cannot be represented in a straightforward manner. It needs to be unfolded into a 2D surface. There exist many possible projection types to do this, similar to the ones used in cartography. Let's assume spherical projection, which translates longitude and latitude on the sphere to the horizontal and vertical axes of a rectangle.

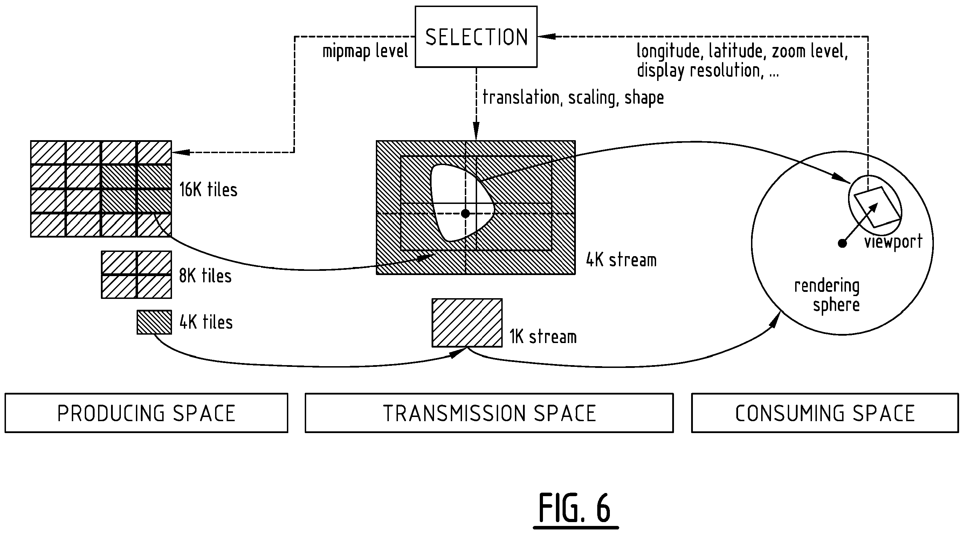

A user has a partial view of the full sphere. We don't need to send the whole unfolded texture as such. The client's viewport is one looking at a certain longitude and latitude with a certain field-of-view and possibly tilted around its optical axis by a certain roll angle. Let us define a good transmission space that takes advantage of this knowledge. Figure 6 illustrates a non-limiting implementation of this embodiment.

The 360 panoramic video can also be captured and stored in stereoscopic format, typically represented by two textures, with optionally two depth maps in order to provide to the HMD the ability to adapt focus and provide depth cues, or in other words "a 3D immersive feeling". In this case, each eye receives a different and dedicated texture, or viewport, on the HMD. In the consuming space, the content is then stored as two textures, which are generally independently processed, each undergoing an independent spherical projection. Same happens for the optional two depth maps attached to each of the 360 panoramic textures.

Based on the state of the client, the viewport is determined. The viewport is defined as a relevant partial view on otherwise abundant content, the relevancy being determined based on the state of the client. Hereunder, the different steps are described to provide relevant content from a server to a client.

In a first step, a viewport is selected. If many are available, the selection block will first decide on the appropriate mipmap level of the content. By knowing the devices resolution and the requested FOV, it can calculate which part of the viewport needs which resolution in the content. The second embodiment (see below) describes more in detail how partitioning in different resolution levels can be implemented. In figure 6 for instance, content is tiled in 3 mipmap levels: 4x4 tiles creating a 16K version, 2x2 tiles creating an 8K and a single 4K version. This resolution map typically isn't uniform, but one embodiment may choose to fix a single resolution for the whole viewport, for instance the one on the horizon. The zooming level will probably be between the available mipmap levels of the producing space. This means one embodiment would pick the first scale-space level above the one computed. In figure 6, mipmap level 16K is chosen. Another embodiment may choose to interpolate between that level and the one right below.

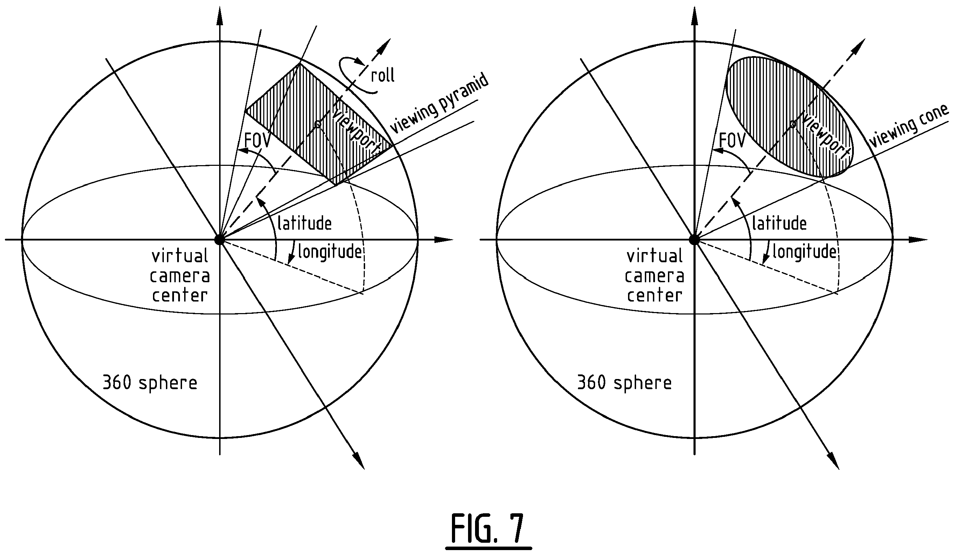

In a next step it is decided which parts at that resolution are visible. For this embodiment, the transmission space is roll-independent, transforming the user's viewing pyramid (corresponding to a rectangular display) with the aforementioned 4 degrees of freedom into a viewing cone with only 3, being invariant to head tiling motion (corresponding to a circular display). This simplifies a lot of calculations. Figure 7 shown these options. Figure 7 illustrates on the left hand side the viewing pyramid of a user looking at a specific longitude, latitude and roll angle. The viewport is defined as the intersection of that pyramid with top angle equal to the field-of-view (FOV) and the 360 sphere. Figure 7 shows on the right hand side a similar viewing pyramid in the shape of a viewing cone, which is invariant to the roll angle.

Using a predetermined formula, it can be determined whether or not content is inside the viewport or not. If $\theta_0$ is defined as longitude of the center of the viewport, $\varphi_0$ as latitude of the center of the viewport and $\alpha$ as half of the FOV of the viewport, a pixel at longitude $\theta$ and latitude ($\varphi$ is within the viewport if:

$$cos\alpha \geq cos(\theta\text{-}\theta_0).cos\varphi_0.cos\varphi + sin\varphi_0.sin\varphi$$

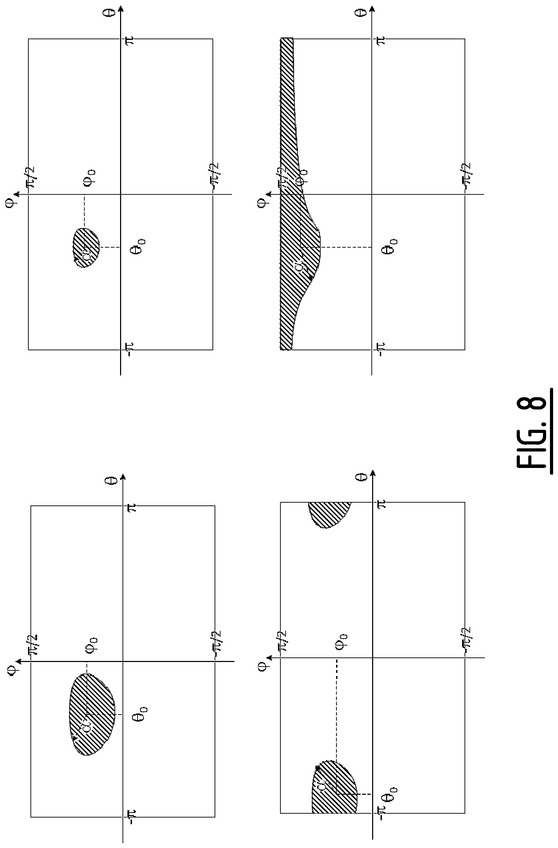

This formula can be solved for θ to calculate the boundaries of the viewport in the producer's space. Figure 8 shows the resulting region for different sets of parameters. Figure 8 illustrates at the top left a spherical projection of the conic viewport defined by a half-FOV α, looking at longitude $\theta_0$ and latitude $\varphi_0$. The longitude of the spherical projection is delimited by a wrap-around at π, the latitude at π/2. Figure 8 shows at the top right deformation of this shape as a result of zoom in by decreasing the FOV. Figure 8 shows at the bottom left deformation as a result of changing the longitude of the viewing direction. In this context, note the wrap around at π. Figure 8 shows at the bottom right the result of changing the latitude of the viewing direction. In this context, note that for certain latitudes near the pole, full longitudinal span is needed.

The ingest block will fetch and optionally decode all parts of the content at the computed scale-space level(s) that have pixels with a longitude and a latitude conforming the above formula. To quickly check whether or not a spatial partition intersects with the viewing cone, it may be advised to check against the bounding box in longitude-latitude space of the formula above. It can be derived in closed form using following formulas, provided as an example only:

$$\varphi_{min} = max(\varphi_0 - \alpha, -\pi/2)$$

$$\varphi_{max} = min(\varphi_0 + \alpha, \pi/2)$$

$$\theta_{min} = \theta_0 - cos^{-1}(\ sqrt(\ cos^2 a - sin^2 \varphi_0\ )\ /\ cos\varphi_0\ ),$$

when defined, -π otherwise

$$\theta_{max} = \theta_0 + cos^{-1}(\ sqrt(\ cos^2 a - sin^2 \varphi_0\ )\ /\ cos\varphi_0\ )\ ),$$

when defined, π otherwise

Note that because of the wrap around and because it exists at many scales, this bounding box may actually decompose into several boxes in the producing space.

In case of stereoscopic 360 content, the same can be done for each panoramic texture and optional depth maps, as for the single panorama content texture as described above. Depth maps are typically stored at a resolution lower or equal to the texture panoramas but with a higher bit resolution for the depth values representation. The viewport for each eye can be computed with the same formula as above, but taking the source in each respective stereoscopic texture. It follows that the number of tiles to decode and stored is typically doubled for the stereo content.

The selection block will preferably also decide how to map this region of interest, defined by the above formula, to a fixed rectangular frame. The scale and the translation of the transmission space representation is selected. Let's assume not to take rotation into account for the ease of explanation. The skilled person will understand how rotation can be taken into account.

For the scaling, there are two preferred cases: the scaling is accommodated to the resolution of the display, minimizing the bandwidth of what will be transmitted or the resolution of the producer's side is accommodated, off-loading scaling to the client's device, which perhaps has to scale anyway during the texture mapping of the sphere. Another thing to take into consideration is that the viewport at the chosen scale needs to fit the fixed rectangle sent to the streaming block. If it doesn't, the weigh of scaling it smaller, hence displaying under the required resolution, or clipping it to the rectangle, discarding pixels that will be displayed otherwise.

In the step of translating the content, a choice can be made between a first option of moving the viewport along and keeping the content fixed or a second option of keeping the viewport centered in the rectangle, and moving the content underneath it. Both options will have repercussions on the effect on encoding this data for streaming. The second option has the advantage that the viewport itself won't need motion compensation and there is no wrap-around effects at the boundaries of the longitude. The first option will minimize motion-compensation on the content within the viewport. A good trade off will prefer the first option on big field of views and the second option on smaller ones. Also, the first option only makes sense if the resolution level of the transmission space allows spanning the whole rectangle. When zooming in (decreasing FOV), this will no longer be the case and a centered approach is the appropriate one.

These mapping considerations still hold for stereo content, all operations being done for each eye and respective stereo texture and optional depth content.

In a next step, the first content transformation block will apply this translation and scaling accessing the partitions made available by the ingest block and putting everything together in the rectangular frame. Several options for implementing this exist.

One embodiment could iterate over all pixels in the transmission rectangle. It will test whether or not it is within the viewport defined by the formula and either fetch it from the correct ingest partitions or pad a black pixel. This isn't the best implementation for all content delivery systems though. It is a feasible one on GPU, but on CPU it will perform badly. Fetching will require an interpolation operation, which is a lot faster when it can happen in batch. Even when it doesn't require interpolation, a memory copy too performs best in large chunks.

Another embodiment exploits this knowledge and batch transforms each ingest partition separately to its corresponding region in transmission space. Another embodiment may even first concatenate the ingest partitions and transform everything to the rectangle in one batch. As a consequence, the rectangle will include pixels that are not within the viewport. They will need to be set to zero by a second pass over the whole region.

Setting those out-of-viewport pixels to black is optional, but will save bandwidth. Another advantage is that in an embodiment it can be used as an in-band signal to the client side so the client doesn't have to recalculate or receive the resulting viewport map in the transmission space. It can simply threshold for black pixels to mask the streamed rectangle.

In a next step, the encoding, in the sender, of the rectangular frame for streaming to the client is quite straight forward as existing compression standards can be used right away. It should be noted though that because the viewport moves with the user requests and ingests content from different scales, and because the low latency requirements are not suitable for hierarchical GOP structures such as in AVC or HEVC with B-slices, the motion estimation/compensation as well as the rate control blocks are quite challenged compared to usual video streaming. Combining to this the amount of black pixels around the viewport in the rectangular frame, some basic optimizations are possible in order to avoid forcing the encoding of black pixels, avoid optimizing mean square error outside the viewport etc.

In a stereoscopic case, the same approach can be used but for the two left and right eye panorama textures. Likewise, the optional depth maps can also be transformed to copy depth information for the required viewport. However, to simplify the transmission aspects, it can be also useful to use so-called frame packing strategies to stream stereoscopic content in one single video file by reducing the width or height resolution of the two stereo viewports by a factor two and merging them into a single one. H.264/AVC is a typical example of a codec that enables encoding and flagging stereoscopic content in this way into a single video stream. The copying of the correct pixels into the merged "stereoscopic viewport" from both textures is straightforward. In case depth is available, then the best option might still be to use a multi-stream extensions of coding standards such as H.264/MVC, MV-HEVC or 3D-HEVC which enable to encode two streams with or without depth, with or without inter-view predictions.

Hereunder, a few options are described for dealing with latency. In a server-client setup there is latency on the data channel, both in the uplink as in the downlink. The chosen viewport will be displayed at a delay with respect the requested one by the event. This means that the client will have to access pixels that are not available through the transmission channel. Several options exist for dealing with this, that are not mutually exclusive.

One embodiment may choose to send a low-resolution version of the texture of the full sphere by a second, also fixed channel between server and client. Multiple clients may even share this channel in a single-server-multiple-subscription mode. The client's transformation block will then switch between the high-res stream for all pixels within the selected viewport and the low-res stream for all other pixels, which may incidentally be visible at the borders of the display when rotating the head.

Another option is to incorporate a temporal prediction model on the viewport of the client. It will transform the viewing cone in a way to accommodate with all possible viewports within a time-interval corresponding to the latency between the sent event and the received stream. Several options exist.

One embodiment will implement a zero-order prediction model, meaning it will only depend on the current state of the client. This means that it is assumed that within a small interval from the current time, the viewport will be similar and spatially close to the current one. If the noise model on the state is uniform both in longitude and latitude, the hull of all those viewing cones will be a bigger cone, centered at the current state. This means this embodiment will simply request a larger field-of-view than needed. How much margin is to be taken, can be calculated from the latency and the physical limits of head motion, or at least expected behaviour. The above formula still holds, but with bigger $\alpha$.

Depending on the bandwidth trade-off, the above can be combined with adding multiple viewports. A hi-res small cone, a medium-res bigger cone and a low-res full sphere for instance.

Another embodiment will implement a first-order prediction model, meaning it will depend on the current state and of its first derivative, i.e. the rotational speed of head motion $\Delta\theta$, $\Delta\varphi$. Let's not incorporate the speed of field-of-view change in this embodiment. When one is moving his head in one direction one can expect this motion to persist for a longer period over several frames. The hull of most likely outcomes of where the client's state at a time-interval corresponding to the latency will be at, is now an elliptic cone, an elongated version of the current viewing cone in the direction of the current head speed, optionally plus some uniform margin as in the previously described embodiment.

This means that the formula above no longer holds, as it was one for a circular viewing cone. For the derivation of the formula for the elliptic cone, some approximations are taken to keep the formula's tractable and in closed form. The choice of this approximations is quite arbitrary and easily designed around. However, purely as an example, a possible formula is given hereunder:

A circular viewport is modelled by its implicit equation:

$$x^2 + y^2 = \alpha^2,$$

where

$$x = ( \theta - \theta_0 ) \cdot sqrt ( cos\varphi \cdot cos\varphi_0 )$$

and

$$y = \varphi - \varphi_0$$

Note that $x$ and $y$ are approximated projections. If it is elongated along the axis defined by the speed, such that this ellipse would minimally include the current viewport and the one that is to be expected in a timespan equal to the latency, it can be written down with an implicit formula for this ellipse, making use of the same approximated projections $x$ and $y$:

$$( u.x + v.y - \alpha.\gamma )^2 + ( u.y - v.x )^2 \cdot sqrt ( 1+\gamma ) = ( 1+\gamma ) \cdot \alpha^2,$$

with

$$u = \Delta\theta / sqrt ( \Delta\theta^2 + \Delta\varphi^2 )$$

and

$$v = \Delta\varphi / sqrt ( \Delta\theta^2 + \Delta\varphi^2 )$$

and

$$\gamma = sqrt ( \Delta\theta^2 + \Delta\varphi^2 ) \cdot latency / ( 2.\alpha )$$

This formula can be made explicit for $\alpha$ or $\gamma$ to test whether or not a pixel is within the viewport and latency span:

$$\alpha \leq -\gamma.(u.x + v.y)/(1+2\gamma) + sqrt(1+\gamma)/(1+2\gamma) \cdot sqrt ( (1+\gamma).(x^2+y^2) + \gamma.(u.y - v.x)^2 )$$

$$\gamma \leq (x^2+y^2+\alpha^2) / ( 2\alpha.(\alpha+u.x +v.y) - (u.y - v.x)^2 )$$

This formula can also be solved for $\theta$ to find the longitudinal $\theta_1$-$\theta_2$ range on the parallel at latitude $\varphi$.

$$\theta_{1,2} = \theta_0 + (\alpha+\gamma uvy) / d \pm sqrt(1+\gamma).sqrt( \alpha^2.(1+\gamma).(1+v^2\gamma) - (y-\alpha v\gamma)^2 ) / d ,$$

with

$$d = (1+ v^2\gamma) \cdot sqrt ( cos\varphi \cdot cos\varphi_0 )$$

An approximated bounding box can be found for longitude and latitude as well:

$$\varphi_{min} = max(\varphi_0 + \alpha v\gamma - \alpha.sqrt(1+\gamma). \ sqrt \ (1+v^2\gamma), -\pi/2)$$

$$\varphi_{max} = min(\varphi_0 + \alpha v\gamma + \alpha.sqrt(1+\gamma). \ sqrt \ (1+v^2\gamma), \pi/2)$$

$$\theta_{min} = \theta_0 + \alpha u\gamma/d' - \alpha.sqrt(1+\gamma). \ sqrt \ (1+u^2\gamma) \ /d'$$

$$\theta_{max} = \theta_0 + \alpha u\gamma/d' + \alpha.sqrt(1+\gamma). \ sqrt \ (1+u^2\gamma) \ /d',$$

with

$$d' = cos \ (\varphi +\alpha v\gamma) \ . \ sqrt \ ( \ cos(1.8\varphi^2\alpha) \ )$$

In case of stereoscopic 360 content, these latency strategies still hold, the two viewports predictions being held in sync for each eye. One could benefit from the depth information on the panorama textures to also refine the viewport position prediction as the user's attention might be triggered by an object appearing or moving at a given depth. If the object starts to appear in the peripheral view of only one of the eyes, a prioritization can also be added to the prediction in order to give more weight towards the direction in which the object appears.

The spherical projection choice has a disadvantage too though. At the poles, the viewports become quite wide, even when the FOV is small. This can be seen in figure 8 above. When the latitude goes to the extremes, the few pixels that make up the parallel (circle at constant latitude) get spread over the full horizontal axis, spending more pixels than needed.

When this projection type is used at the producing side, more than is actually needed will be stored and encoded at the poles. When it is queried, more fetching and decoding is needed. When this projection type is used at the transmission side, redundant information is sent. It might even be necessary to scale at a lower resolution, because the wide viewport doesn't fit the transmission rectangle anymore.

In a preferred embodiment, the drawbacks above can be tackled by not using the spherical projection system, but transforming the longitude by multiplying it with the cosine of the latitude. In this way the number of pixels used in the parallel are exactly corresponding to the circumference at that parallel and the effective resolution is uniform over all latitudes. The downside is that the wrap-around behavior of the longitude becomes more complex.

When used at the producing side, this is an issue when trying to batch transform information. But there is the extra advantage in the case of spatial tiling, see embodiment 2 below, that some tiles can be discarded. When the cosine-transformed viewport is used in the transmission space, the wrap-around will not be an issue, when the viewport is kept centered. These considerations are exactly the same for stereoscopic content.

Embodiment 2: partitioning in the producer's space

Many reasons may amount to a very big content in size. It may be at very high resolutions, high framerates, many versions depending on user's choices, low compression, two panoramas and depth information for stereoscopic content, etc. When this content is accessed, it is typically wanted to query small subparts, so not all content needs to be fetched from disk and/or decoded. Needless to add that both operations would require quite some time. For random accessing the content, an index table is needed to point to specific offsets in the full content. This can be implemented by having multiple files for different parts and trusting the filesystems index table for random access. But also some file formats already support forms of random access.

Temporal random access at the granularity of a GOP size is readily available from most video codecs. They allow to seek in the stream. The smaller the GOP size the finer this granularity, or analogously, the faster seeking to a specific frame. For complete random access, it is an option to have a solely intra-coded stream. MJPEG provides exactly that. It is also possible to have a separate image file (png, jpeg, ...) per frame. However, the advantage of exploiting intercoding gains is lost.

Spatial random access can be done by tiling the frames into rectangles. HEVC supports this type of partitioning within a single stream. Extensions of HEVC for the multi-view and 3D case also allow tiling in each substream for texture and optionally depth in the stereoscopic case. Without loss of generality, these tiles can be chosen to be non-overlapping, in which case there are boundary cases where at least 2, but possibly up to 4 tiles have to be queried. When the server's mapping to transmission space isn't as nicely aligned with having rectangular tiles, it is possible to benefit from having many small tiles to accommodate to the irregular shape. On the other hand, it could also be beneficial to have fewer, bigger overlapping tiles, such that in any case, only one tile has to be queried per viewport.

Scale-space random access can be done by keeping copies of the content at different resolutions, called mipmap levels. When the selection block decides that some resolution wouldn't suffice for the device's display capabilities, it could source from a bigger level. Conversely, when the user zooms out on that part, it is not desired to be sourcing from a large region in the high-resolution content, only to scale it down to a lower resolution. The selection block will then decide a lower mipmap level suffices. The block can also force a lower level for other reasons, for instance because it only needs a small part of it and decoding high-res levels would take up too much resources, or because sending high-resolutions isn't possible at the current available bandwith. Having different scales in one stream is supported by scalable codecs like SVC. The choice of scaling levels that are available in the producer's space is a discrete one. When the selection block asks for a mapping from an intermediate level, it could optionally interpolate between two levels.

Regarding stereoscopic content, standards extensions do not include per se profiles that combine scale and view scalability, however, these extensions are technically possible.

Quality or fidelity random access is another dimension that can be used as to store several encoded copies of the content with different bitrates and reconstruction quality in order to better meet transmission tradeoffs or to adapt quality following a foveated vision model on the viewport. This can be useful as well for reaching better tradeoffs between ingest to transform blocks bandwidth usage as well as balancing distortions due to the first tile encoding and the viewport encoding consecutive distortions. This also holds for stereoscopic content where textures and optionally depth are incurring different encoding and consecutive distortions that may lead to attention distraction due to flickering artifacts or artifacts that impact depth cues. Although raw storage would increase the output quality considerably, this might not be a workable setting for many content delivery systems.

In many cases it will be a combination of all of the above, either supported by the codec or explicitly split over different files, indexed by the filesystem. Note that even when the user doesn't request temporal random access, because he's viewing the video data linearly without seeking, requesting spatial tiles dynamically enforces the individual tiles to be seekable, because they won't be accessed the whole time.

For spatial tiling, one embodiment may keep all data of all queried tiles separately, which will all be accessed by the server's transformation block during mapping separately. Another embodiment may choose to first concatenate those tiles in a big global frame, to ease up the computations made by server's transformation block.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the FIGs., including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

**Claims**

1. Content delivery system for providing content from a server to a client, the content delivery system comprising a consumer space at the client side, a producer space at the server side, and a transmission space interconnecting said consumer space and said producer space, wherein a first content transformation block is provided to transform content between the producer space and the transmission space, and a second content transformation block is provided to transform content between the transmission space and the consumer space, wherein transmission space further comprises a sender and a receiver to transmit content between the transformation blocks over a network, wherein the consumer space comprises a display block for displaying content from the second content transformation block, wherein a selection block is provided for monitoring a state of the at least one client and for providing feedback regarding the monitored state to the producer space, wherein an ingest block is provided at the producer space for fetching content to the first content transformation block from a content source based on said feedback.

2. Content delivery system according to claim 1, wherein the content is 360 panoramic video, and wherein said state comprises at least one of a longitude, a latitude, a roll and a field of view (FOV).

3. Content delivery system according to claim 2, wherein said ingest block is adapted to fetch content from said 360 panoramic video that is related to at least one roll-independent viewport, which is spherically projected on a fixed rectangle.

4. Content delivery system according to claim 3, wherein said viewport is enlarged using a predetermined enlarging mechanism to reduce latency effects when said client changes state.

5. Content delivery system according to claim 3 or 4, wherein said viewport is supplemented by a further viewport having a significantly larger shape and a lower resolution.

6. Content delivery system according to any one of the previous claims, wherein the ingest block and the first content transformation block are adapted to transform the content into frames.

7. Content delivery system according to any one of the previous claims, wherein a single ingest block is connected to multiple first content transformation blocks, wherein each of the multiple first content transformation blocks is allocated to a different client in a different consumer space.

8. Content delivery system according to any one of the previous claims, wherein multiple channels are formed between the sender and receiver, wherein each channel transmits a different segment of said content.

9. Server device for use in the content delivery system according to any one of the previous claims, wherein the server device comprises a first content transformation block provided to transform content between a producer space and a transmission space, and comprising a sender for sending the transformed content to a receiver at a client device, the server device further comprising an ingest block provided for fetching content from a content source to the first content transformation block based on feedback from a selection block provided for monitoring a state of the client device.

10. Client device for use in the content delivery system according to any one of the claims 1-8, wherein the client device comprises a receiver for receiving content from a sender at a server device, and comprising a second content transformation block provided to transform content from the receiver between a transmission space and a consumer space, the client device further comprising a display block for displaying the content from the second content transformation block, and the client device being provided for monitoring a state of the at least one client device and for providing feedback regarding the monitored state to the server device.

11. Method for providing content from a server to a client, the method comprising:

- Receiving feedback regarding a state of the client via a selection block at an ingest block which is provided at a producer space, at the server side;
- Fetching content from a content source, based on said feedback, to a first content transformation block which is provided between said producer space and a transmission space;
- Transforming, at the first content transformation block, the fetched content for transmission;
- Transmitting said transformed content via a sender and receiver provided at the transmission space;
- Transforming, at a second content transformation block which is provided between said transmission space and a consumer space at the client side, content from said receiver into content for a display block provided at the consumer space;
- Displaying the content to the client.

12. Method according to claim 11, wherein the content is 360 panoramic video, and wherein the state of the client comprises at least one of a longitude, a latitude, a roll and a field of view (FOV) obtained by a state detector.

13. Method according to claim 12, wherein said fetching comprises selecting content from said 360 panoramic video, said selecting being related to at least one roll-independent viewport, which is spherically projected on a fixed rectangle to be displayed by said display block.

14. Method according to claim 13, comprising the further step of enlarging said viewport using a predetermined enlarging mechanism to reduce latency effects when said client changes state.

15. Method according to claim 13 or 14, comprising the further step of supplementing said viewport by a further viewport having a significantly larger shape and a lower resolution.

FIG. 1

FIG. 2

Layer 1

Layer 2

Layer 0

## FIG. 3

Left panorama

Right panorama

Left viewport

Right viewport

Right

Left

Left | Right

Left

Right

## FIG. 4

FIG. 5

PRODUCING SPACE        TRANSMISSION SPACE        CONSUMING SPACE

EP 3 367 626 A1

EP 3 367 626 A1

SELECTION

mipmap level

longitude, latitude, zoom level,
display resolution, ...

translation, scaling, shape

16K tiles

8K tiles

4K tiles

4K stream

1K stream

rendering
sphere

viewport

PRODUCING SPACE

TRANSMISSION SPACE

CONSUMING SPACE

FIG. 6

**FIG. 7**

FIG. 8

Europäisches
Patentamt

European
Patent Office

Office européen
des brevets

# EUROPEAN SEARCH REPORT

Application Number

EP 17 15 8163

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 490 179 A1 (ALCATEL LUCENT [FR]) 22 August 2012 (2012-08-22) * paragraphs [0001] - [0012], [0015] - [0018], [0021], [0027], [0028], [0031] - [0034], [0038] - [0047], [0049] - [0056]; claims; figures 1-3 * | 1-15 | INV. H04L29/06 H04N21/2343 G06F17/30 |
| X | EP 3 065 406 A1 (NOKIA TECHNOLOGIES OY [FI]) 7 September 2016 (2016-09-07) * paragraphs [0004] - [0013], [0019], [0023] - [0025], [0027] - [0029], [0031] - [0038], [0040], [0043], [0045], [0051] - [0053], [0055], [0056], [0058]; figures 1a-1c, 2 * | 1-15 | |
| X | US 2016/012855 A1 (KRISHNAN RATHISH [US]) 14 January 2016 (2016-01-14) * paragraphs [0006], [0026] - [0031], [0048], [0052] - [0056], [0058], [0059], [0061], [0064], [0068], [0070], [0082], [0084], [0088], [0091] - [0094]; figures 4-7 * | 1-15 | |
| X | EP 2 961 183 A1 (ALCATEL LUCENT [FR]) 30 December 2015 (2015-12-30) * paragraphs [0005] - [0013], [0039], [0052] - [0061], [0067] - [0069]; claims; figures 1-3 * | 1-15 | TECHNICAL FIELDS SEARCHED (IPC) H04N G06F H04L |

The present search report has been drawn up for all claims

| Place of search | Date of completion of the search | Examiner |
|---|---|---|
| Munich | 9 August 2017 | Herry, Tzvetanka |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 15 8163

This annex lists the patent family members relating to the patent documents cited in the above-mentioned European search report.
The members are as contained in the European Patent Office EDP file on
The European Patent Office is in no way liable for these particulars which are merely given for the purpose of information.

09-08-2017

| Patent document cited in search report | | Publication date | Patent family member(s) | | Publication date |
|---|---|---|---|---|---|
| EP 2490179 | A1 | 22-08-2012 | NONE | | |
| EP 3065406 | A1 | 07-09-2016 | CN | 105939482 A | 14-09-2016 |
| | | | EP | 3065406 A1 | 07-09-2016 |
| | | | GB | 2536025 A | 07-09-2016 |
| | | | JP | 2016165105 A | 08-09-2016 |
| | | | US | 2016260196 A1 | 08-09-2016 |
| US 2016012855 | A1 | 14-01-2016 | CN | 106537894 A | 22-03-2017 |
| | | | EP | 3170305 A1 | 24-05-2017 |
| | | | US | 2016012855 A1 | 14-01-2016 |
| | | | WO | 2016010668 A1 | 21-01-2016 |
| EP 2961183 | A1 | 30-12-2015 | EP | 2961183 A1 | 30-12-2015 |
| | | | JP | 2016012920 A | 21-01-2016 |
| | | | US | 2015382065 A1 | 31-12-2015 |

EPO FORM P0459

For more details about this annex : see Official Journal of the European Patent Office, No. 12/82